# EUROPEAN PATENT APPLICATION

(11) **EP 3 258 392 A1**
(43) Date of publication of application: **20.12.2017**
(21) Application number: 16191870.1
(22) Date of filing: 30.09.2016
(51) Int. Cl.: G06F 17/30, G06F 17/27, G10L 15/26, G10L 25/54

(54) **SYSTEMS AND METHODS FOR BUILDING CONTEXTUAL HIGHLIGHTS FOR CONFERENCING SYSTEMS**

(30) Priority: 14.06.2016 IN 201641020220
(71) Applicant: Wipro Limited, 560 035 Karnataka (IN)
(72) Inventor: RAJAGOPAL, Harish Nair, 695012 Kerala (IN); CHOUDHURY, Abul Koyes, 560102 Bangalore (IN); THONIKKANDY, Sreeprakash, 673577 Kerala (IN)
(74) Representative: Finnegan Europe LLP

(57) **Abstract**

This disclosure relates to a method of highlighting at least a part of communication segments between a plurality of participants in a communication network. The method includes extracting, by a highlighting device, semantic information and a plurality of vocal cues from multimedia communication data exchanged between the plurality of participants; identifying, by the highlighting device, communication segments within the multimedia communication data by aggregating the semantic information and the plurality of vocal cues; associating, by the highlighting device, meta-data with each of the communication segments based on communication segment parameters; and highlighting, by the highlighting device, contextually, at least a part of the communication segments based on highlighting parameters received from a user.

## Description

### Technical Field

The present invention relates to teleconferencing systems and, in particular, to systems and methods for building contextual highlights for conferencing systems.

### Background

Teleconferencing systems are widely used for personal or official purposes to facilitate communication between multiple users. With regards to official communications, because of duration of such communication sessions and complexity of the content discussed, it may difficult for majority of the participants to recall the subject matter discussed during the communication session. In order to cater to such issue, there have been multiple advancements in conventional teleconference systems.

One such conventional teleconferencing system allows recording of audio and video content during a communication session. However, recordings do not give any additional benefit and merely provide an archive of the proceedings in the communication session for future reference. A user thus might not be able to use the recordings to quickly identify parts of the communication session that are relevant or important with respect to a user's needs.

Other conventional teleconferencing systems use text conversion of the communication session to build text based summaries from the recorded communication session. However, such text conversions may not accurately capture context in conversational voice or video cues in the communication session. Moreover, these summaries are not personalized for users interested in specific parts of the conversation or conversation topics spread across multiple communication sessions.

### SUMMARY

In one embodiment, a method of highlighting at least a part of communication segments between a plurality of participants in a communication network. The method includes extracting, by a highlighting device, semantic information and a plurality of vocal cues from multimedia communication data exchanged between the plurality of participants; identifying, by the highlighting device, communication segments within the multimedia communication data by aggregating the semantic information and the plurality of vocal cues; associating, by the highlighting device, meta-data with each of the communication segments based on communication segment parameters; and highlighting, by the highlighting device, contextually, at least a part of the communication segments based on highlighting parameters received from a user.

In another embodiment, a system for highlighting at least a part of communication segments between a plurality of participants in a communication network is disclosed. The system includes at least one processors and a computer-readable medium. The computer-readable medium stores instructions that, when executed by the at least one processor, cause the at least one processor to perform operations that include extracting semantic information and a plurality of vocal cues from multimedia communication data exchanged between the plurality of participants; identifying communication segments within the multimedia communication data by aggregating the semantic information and the plurality of vocal cues; associating meta-data with each of the communication segments based on communication segment parameters; and highlighting contextually, at least a part of the communication segments based on highlighting parameters received from a user.

In yet another embodiment, a non-transitory computer-readable storage medium for highlighting at least a part of communication segments between a plurality of participants in a communication network is disclosed, which when executed by a computing device, cause the computing device to: extract semantic information and a plurality of vocal cues from multimedia communication data exchanged between the plurality of participants; identify communication segments within the multimedia communication data by aggregating the semantic information and the plurality of vocal cues; associate meta-data with each of the communication segments based on communication segment parameters; and highlight contextually, at least a part of the communication segments based on highlighting parameters received from a user.

### BRIEF DESCRIPTION OF THE DRAWINGS

The accompanying drawings, which are incorporated in and constitute a part of this disclosure, illustrate exemplary embodiments and, together with the description, serve to explain the disclosed principles.
FIG. 1 is a diagram of an exemplary communication environment in which various embodiments may function.
FIG. 2 illustrates a flow chart of a method for highlighting one or more parts of communication segments between a plurality of participants in a communication network, in accordance with an embodiment.
FIG. 3 illustrates a flow chart of a method for highlighting one or more parts of communication segments between a plurality of participants in a communication network, in accordance with another embodiment.
FIG. 4 illustrates a flow chart of a method for contextually highlighting one or more parts of communication segments, in accordance with an embodiment.
FIG. 5 is a block diagram of a system for highlighting one or more parts of communication segments between a plurality of participants in a communication network, in accordance with an embodiment.
FIG. 6 illustrates a block diagram of an exemplary computer system for implementing various embodiments.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

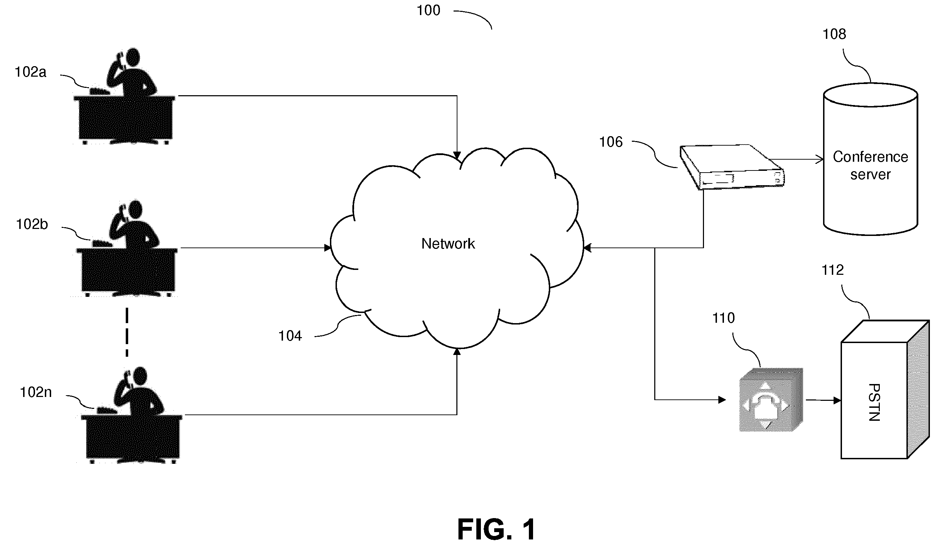

Referring to FIG. 1, an exemplary communication environment 100 in which various embodiments may function is illustrated. As shown, the communication environment 100 includes a network 104 that may be a wired or a wireless network. The network 104 may be Local Area Network (LAN) that may be implemented using a TCP/IP network and may implement voice or multimedia over Internet Protocol (IP) using a Session Initiation Protocol (SIP). The network 104 is connected to a conference manager 106 that is capable of controlling and carrying out multimedia communication sessions and is responsible for overall management of such sessions. A multimedia communication session may be a conference session between multiple participants. The conference manager 106 may be further connected with a conference server 108 that stores details related to conferences that are either in progress or are complete. Details stored in the conference server 108 may include, but are not limited to list of participants, schedules of multimedia communication sessions, and reminders and emails for sending reminders.

The network 104 is further connected to a gateway 110 which may be implemented as a gateway to a Private Branch Exchange (PBX) (not shown in FIG. 1), a Public Switched Telephone Network (PSTN) 112, or any of a variety of other networks, such as, wireless or cellular networks. In addition, one or more communication devices 102a-102n may be operably coupled to the network 104. One or more of the communication devices 102a-102n may act a highlighting device in various embodiments. Examples of the communication devices 102a-102n may include, but are not limited to telephone, mobile phone, tablet, phablet, and Personal Digital Assistants (PDAs).

The communication devices 102a-102n may also be personal computers that implement various multimedia communication applications. Examples of such multimedia communication applications may include, but are not limited to Skype, Windows Messenger, iMesssage, WhatsApp, and WebEx. Additionally, the communication devices 102a-102n may use peripheral cameras, microphones and speakers to enable telephony and other multimedia messaging capabilities.

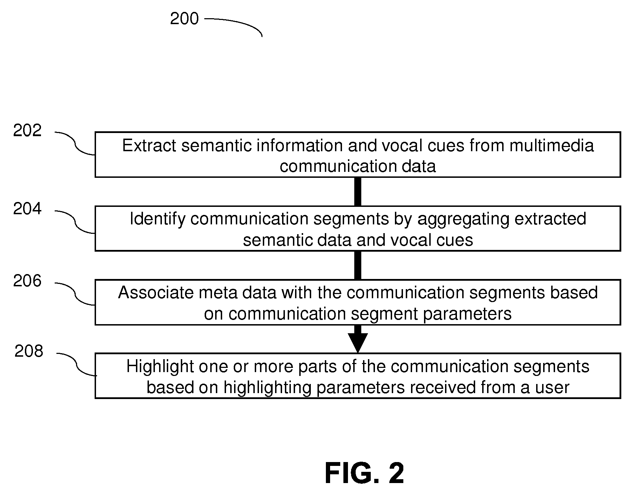

Referring now to FIG. 2, a flowchart of a method 200 for highlighting one or more parts of communication segments between a plurality of participants in a communication network is illustrated, in accordance with an embodiment. The term "highlighting" generally refers to identifying certain information within the totality of information that is contained the communication segments. The information that is identified may summarise or be representative of the content of the communication segments and/or may be information that is deemed to be significant. Highlighting may also include storing and/or displaying the information that is identified. The one or more parts of the communication may be highlighted based on interests specific to a user. The communication segments may be extracted from multimedia communication data exchanged between the plurality of participants engaged in a multimedia communication session. The multimedia communication session may be a conference session that is a combination of video and audio sessions, and thus the multimedia communication data exchanged may include audio and video data. The multimedia communication session may also be a webinar.

At step 202 semantic information and a plurality of vocal cues is extracted from the multimedia communication data exchanged between the plurality of participants. The extraction may be done either from a live or a recorded multimedia communication session. The term "semantic information" is preferably understood to refer to information that is conveyed by the actual words that are spoken by the participants. The term "vocal cues" is preferably understood to refer to information that describes or characterizes the way in which words are spoken by the participants.

To extract the semantic information, voice data in the multimedia communication data is first converted into text data. The conversion can be performed using a natural language processor using natural language processing engines, for example, Nuance, Apache NLP, and Stanford's Core NLP. The text data may then be provided to a semantic analyzer in order to extract semantic information. The output from the semantic analyzer is received based on the text data and application of various analytics and business rules of semantic analysis built in the semantic analyzer. These analytics and business rules are configurable by an administrator in the semantic analyzer. For example, the rules for performing semantic analysis may include rules for mapping participants, tolerance rules, and key data set rules. Further, the rules for performing voice analysis may include conversation gap rules and continuity rules. By way of an example, mapping rules can specify mapping of participants to voice based on dial-in numbers, credentials, and voice samples. Conversation gap rules may specify the time gap thresholds between voices to be treated as silence and/or indicators for splitting conversation segments. Continuity rules may specify which conversation segments can be grouped together based on participants and topics.

Semantic analysis may include, but is not limited to mapping of participants and keywords. The semantic information thus extracted may include, but is not limited to, an ontological map of conversations in the multimedia communication session, keywords used in conversation within the multimedia communication session, relevance of the keywords used within the multimedia communication session, a relationship between various keywords, conversation grouping and time slots, and/or a mapping of each conversation with participants who are conducting the conversation.

Further, to extract the plurality of vocal cues, a voice analyzer filters conversation gaps within the multimedia communication data in order to generate clean conversation segments. Voice analyzer analyzes vocal intensity of a participant, engagement of participants, pitch of a speaking participant, emotions of the speaking participant, response time of participants, and speed of conversation of participants. Based on the analysis, the voice analyzer generates intensity of participants, engagement of participants, authority of speaking participant, and/or tone of the speaking participant, which are all different vocal cues

Thereafter, at step 204, communication segments are identified within the multimedia communication data. The identification is based upon aggregation of the semantic information and the plurality of vocal cues extracted at step 202. In an embodiment, the communication segments may be identified by using groupings of conversations in the multimedia communication data and time slots for each conversation. Additionally, clean conversation segments generated post filtering conversation gaps in the multimedia communication data may also be used for identification of the communication segments. Conversation gaps, for example, may include long pauses happening while waiting for people to join the call or while waiting for documents to download, or when participants are having offline conversations keeping the mic on mute.

Thereafter, at step 206, the communication segments identified at step 204 are associated with meta-data based on various communication segment parameters. These communication segments can have one or more conversation segments, which could be chronologically ordered but may or may not be adjacent to each other. They could typically be conversations around a specific topic or phase of a conversation. For example, introduction of everyone on a conference call. The individual communication segments may also have relationships to each other via the meta-data associated with it. The communication segment parameters may include, but are not limited to an ontological map of conversations in the multimedia communication data, keywords, relevance of the keywords, participants in the multimedia communication session, intensity of one or more of the plurality of participants, engagement of one or more of the plurality of participants, authority and tone of one or more of the plurality of participant while speaking.

At step 208, one or more parts of the communication segments are highlighted using highlighting parameters received from a user based on his/her requirement. The highlighting parameters may be received as an input from the user through an interface on any communication device (for example, communication devices 102a-102n). The highlighting parameters may include, but are not limited to multimedia communication sessions of interest to the user, approximate output length of highlighting required by the user (for example, a user may require 15 to 20 minutes of output length), participants in the multimedia communication session, importance and relevance associated with the participants (for example, main speaker, host, and moderator), time interval of interest in the conference session (for example, a user may be interested in first 15 minutes or the last 15 minutes of a multimedia communication session), and contextual keywords used in the multimedia communication session.

The above described method enables generation of a personalized and contextual summary of a multimedia communication session that may be a conference session or a webinar. The summary is generated based on individual needs, topics, roles, or participants by dynamically generating relevant meta-data along with content time stamp by using a semantic analyzer and a voice analyzer.

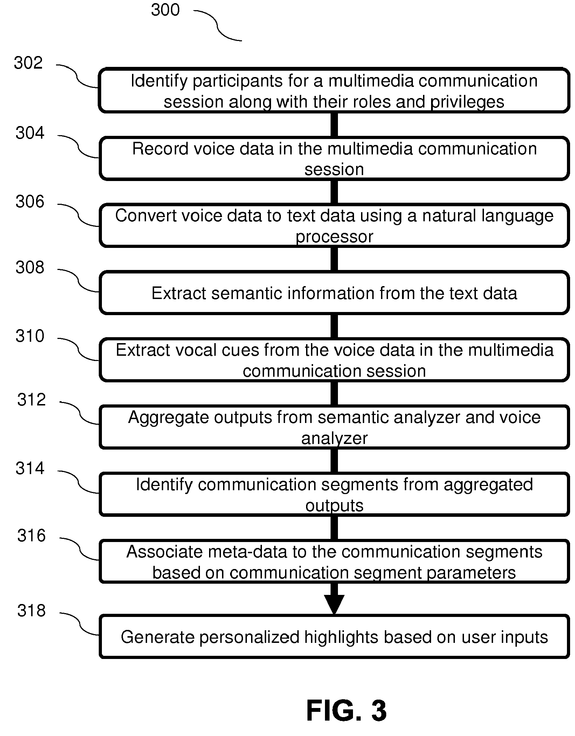

Referring now to FIG. 3, a flowchart of a method 300 for highlighting one or more parts of communication segments between a plurality of participants in a communication network, is illustrated in accordance with another embodiment. Certain specific communication segments in a multimedia communication session are contextually highlighted based on specific interests of a user. These specific interests, for example, may include, but are not limited to specific keywords, participants in a multimedia communication sessions. These are discussed in greater detail in the description given below.

At step 302, details of a participant, who logs into the multimedia communication session (for example, a conference session), are fetched from a directory service. The directory service may be a public directory or a private directory service. Details of the participant may include roles and privileges assigned to that participant. These roles and privileges may be defined by an organizer of the multimedia communication, while sending out the invitations. Alternatively, when such roles and privileges are not defined by the organizer, default profiles for various participants may be utilized. The organizer may send the invitations for the multimedia communication session through emails, text messages, and calendar invites. Such invitations might be sent with a login and password, such that, a participant not having valid login credentials would be denied access to the multimedia communication session.

Thereafter, at step 304, voice data in the multimedia communication session is recorded. Each voice track may be individually recorded. The voice data may be received from conference port of one of the communication devices used to participate in the multimedia communication session. The recorded voice data is then converted into text data at step 306. The voice data may be converted to text data through a natural language processor that utilizes a natural language processing engine. The text data may be generated along with time stamps that may enable correlation of the text data with the voice data.

At step 308, semantic information is extracted from the text data. To this end, a semantic analyzer may be utilized. The semantic information may include, but is not limited to an ontological map of the conversations in the multimedia communication data, keywords, relevance of keywords, relationship between keywords, grouping of the conversations, time slots for each conversation, or mapping of each conversation with a conducting participant.

After extraction of semantic information, vocal cues are extracted from the multimedia communication data at step 310. This extraction may be performed using a voice analyzer. The voice analyzer filters out conversation gaps in the multimedia communication data in order to generate clean conversation segments based on predefined analysis and business rules. The clean conversation segments enable extraction of the vocal cues, which may include but are not limited to participant's vocal intensity, engagement, authority, tone, emotions, pitch of voice, speed of conversation or response time during a multimedia communication session. In an embodiment, pitch of voice of a participant, speed of conversation of a participant, and response time of a participant in the multimedia communication data may be used as input parameters by the voice analyzer to generate participant's vocal intensity, engagement, authority, tone, and emotion, as output vocal cues.

Thereafter, the extracted semantic information and extracted plurality of vocal cues are aggregated at step 312. Based on this aggregated output, communication segments are identified within the multimedia communication data. This has been explained in detail in conjunction with FIG. 2 given above. Now moving to step 316, meta-data is associated with the identified communication segments based on various communication segment parameters. The communication segment parameters may include, but are not limited to an ontological map of conversations in the multimedia communication data, the keywords, the relevance of keywords, participants in the conference session, intensity of one or more of the plurality of participants, engagement of one or more of the plurality of participants, authority and tone of one or more of the plurality of participant while speaking.

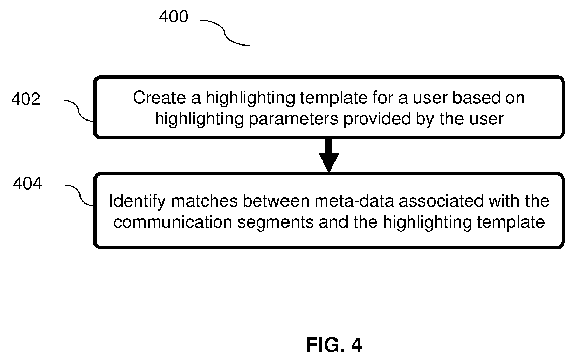

At step 318, one or more parts of the identified communication segments are contextually highlighted based on certain highlighting parameters. These highlighting parameters may include, but are not limited to multimedia communication session of interest to the user, approximate output length of highlighting required, participants in the multimedia communication session, importance and relevance associated with the participants, time interval of interest in the multimedia communication session, contextual key words used within the multimedia communication session. Contextual highlighting of communication segments is further explained in detail in conjunction with FIG. 4.

Referring now to FIG. 4, a flowchart of a method for contextually highlighting one or more parts of communication segments is illustrated, in accordance with an embodiment. The one or more parts are highlighted based on highlighting parameters received from a user in addition to other user specific inputs. The highlighting parameters have been explained in detail in FIG. 2 and 3 given above. At step 402, a highlighting template is created specific to the user, based on the highlighting parameters received as an input from the user. These highlighting parameters may be received as an input from the user through an interface on any communication device (for example, one of communication device 102a-102n). In a similar manner, multiple highlighting templates may be created for multiple users, such that each highlighting template is specific to a given user based on inputs and highlighting parameters provided by that user.

After the highlighting template has been created for the user, matches are identified between the meta-data associated with the communication segments and the highlighting template at step 404. Based on these matches, one or more parts of the communication segments are finally highlighted. These highlighted parts may thereafter be further edited and published for perusal by the user.

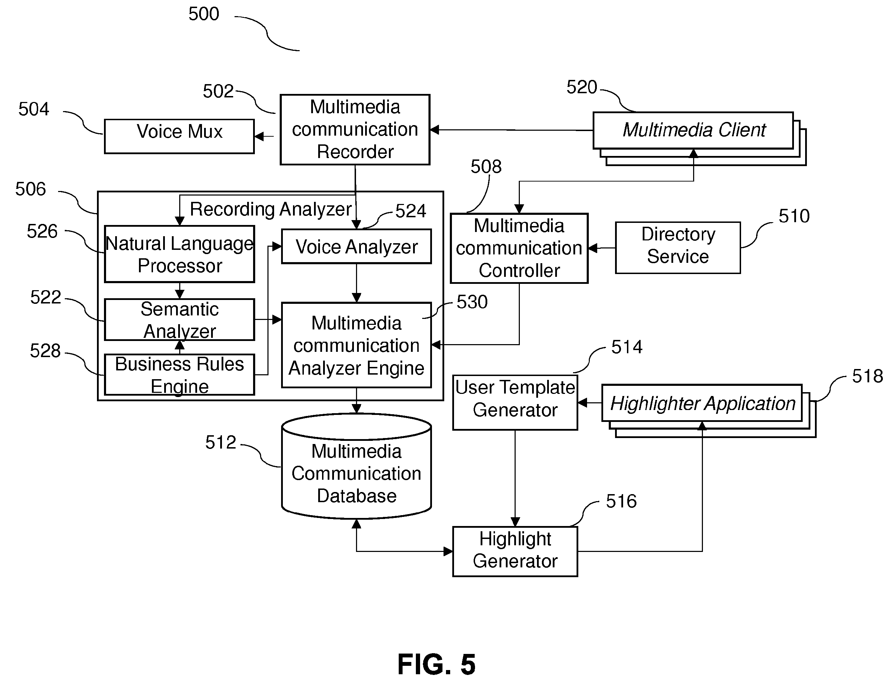

Referring now to FIG. 5, a block diagram of a system 500 for highlighting one or more parts of communication segments between a plurality of participants in a communication network, is illustrated in accordance with an embodiment. The system 500 may include one or more of a processor, memory which includes a temporary transient (volatile) memory such as Random Access Memory (RAM) and a computer readable medium or article (not shown in FIG. 5).

The system 500 includes a backend portion and a frontend portion. The backend portion of the system 500 includes a multimedia communication recorder 502, a voice Multiplexer (MUX) 504, a recording analyzer 506 (which further includes internal components, discussed later), a multimedia communication controller 508, a directory service 510, a multimedia communication database 512, a user template generator 514, and a highlight generator 516.

The frontend portion of the system 500 includes a highlighter application 518 and multimedia clients 520. The multimedia clients 520 may be used by a plurality of participants to register and participate in a multimedia communication session, which may be a conference session or a webinar. The multimedia clients 520 thus identify the participants in the multimedia communication session and also receive and send multimedia data on behalf of the plurality of participants. The multimedia clients 520 are further connected to the multimedia communication controller 508 and the multimedia communication recorder 502. The multimedia communication controller 508 registers each of the plurality of participant in the multimedia communication session through their respective multimedia clients 520. The multimedia communication controller 508 further adds meta-data to participant data received from the multimedia clients 520 and the directory service 510 in order to uniquely identify each of the plurality of participants. The directory service 510 holds meta-data for every participant in the multimedia communication session. The meta-data may include, but is not limited to name of the participants, role of the participants, contact details of each of the participants, and their affiliations.

The multimedia communication recorder 502 is configured to record individual voice tracks and/or video tracks from each of multimedia client port in one or more of the multimedia clients 520. These recorded multimedia sessions may be stored in an internal memory/storage of the multimedia communication recorder 502. The multimedia communication recorder 502 is further operably coupled to the voice MUX 504 and the recording analyzer 506. The voice MUX 504 multiplexes the voice data received from the multimedia communication clients 520 to provide a complete audio to each of the multimedia clients 520.

The multimedia recorder 502 also provides the recorded voice data to the recording analyzer 506. The recording analyzer 506 includes a semantic analyzer 522 and a voice analyzer 524. The recorded multimedia communication sessions are separately fed into both the semantic analyzer 522 and the voice analyzer 524. However, before feeding a recorded multimedia communication session into the semantic analyzer 522, voice data from the recorded multimedia communication session is converted into text data by a natural language processor 526 that may use any natural language processing engine. The natural language processor 526 then communicates the text data to the semantic analyzer 522, which extracts semantic information from the text data. The semantic analyzer 522 further builds an ontological map of conversations during the multimedia communication session and identifies relationship between words spoken within the multimedia communication session. The semantic analyzer 522 also analyzes and identifies cues for conversation groupings and corresponding time slots. The Semantic analyzer 522 extracts keywords spoken within the multimedia communication session and their relevance within conversations. It also maps conversations with the participants who are conducting them.

The multimedia conference recorder 502 also sends the recorded multimedia communication session to the voice analyzer 524. The voice analyzer 524 filters out any gaps within the conversation of the multimedia communication session based on rules provided by a business rules engine 528. The business rules engine 528 may also provide rules for semantic analysis. The voice analyzer 524 analyzes pitch of voice of participants speaking, speed of conversation, and response time in the conversation. Output of the voice analyzer 524 provides intensity of the conversations, engagement of participants, authority of participant speaking in the conversation and tone/emotion of the speaking participant. The outputs from both the semantic analyzer 522 and the voice analyzer 524 are fed into a multimedia communication analyzer engine 530. The multimedia communication analyzer engine 530 aggregates the outputs received from the semantic analyzer 522 and the voice analyzer 524, and thereafter performs an analysis on the aggregated output. The analysis is used to identify communication segments using the conversation grouping and time slots received from the semantic analyzer 522 and clean filtered conversation segments received from the voice analyzer 524. The multimedia communication analyzer engine 530 also generates meta-data which is linked with the identified communication segments. The meta-data includes, but is not limited to ontological map of communication segments, keywords spoken during the multimedia communication session and their relevance in the context of the multimedia communication, participants in the conversation within the multimedia communication, intensity of the participants in the conversation, intensity of the conversation, engagement of conversation between two or more participants, authority of the participant talking, and tone of voice or emotion linked with the conversation in the multimedia communication session. The output of the multimedia communication analyzer engine 530 that includes the time stamped communication segments and associated meta-data, is stored in the multimedia communication database 512, which may be placed remotely or locally.

To highlight one or more parts of the identified communication segments, a user provides his/her highlighting requirement on a user interface of the highlighter application 518. The highlighting requirements may be highlighting parameters that may include, but are not limited to multimedia communication sessions of interest to the user, approximate output length of highlighting required by the user, participants in the multimedia communication sessions, importance and relevance associated with the participants, time interval of interest in the multimedia communication session, and contextual key words used in the multimedia communication session. The highlighting inputs provided by the user through the highlighter application 518 are fed into the user template generator 514, which generates templates for creating highlights from the analyzed recordings. The templates may include parameters, for example, participants of interest, topics of interest, summarization level, and key word relevance. These templates are used by the highlight generator 516 to identify the communication segments that would be utilized to create highlights as requested by the user. The highlights are created based on a match between conversation meta-data and the analyzed recorded multimedia communication session.

Based on a match between the highlighting template and the identified communication segments, a contextual highlight of the multimedia communication session is provided to the customer through the user interface of his or her communications device (for example, one of communication device 102a-102n). For a given multimedia communication session, different users may receive different contextually highlighted results based on their own interests and choice of the highlighting parameters.

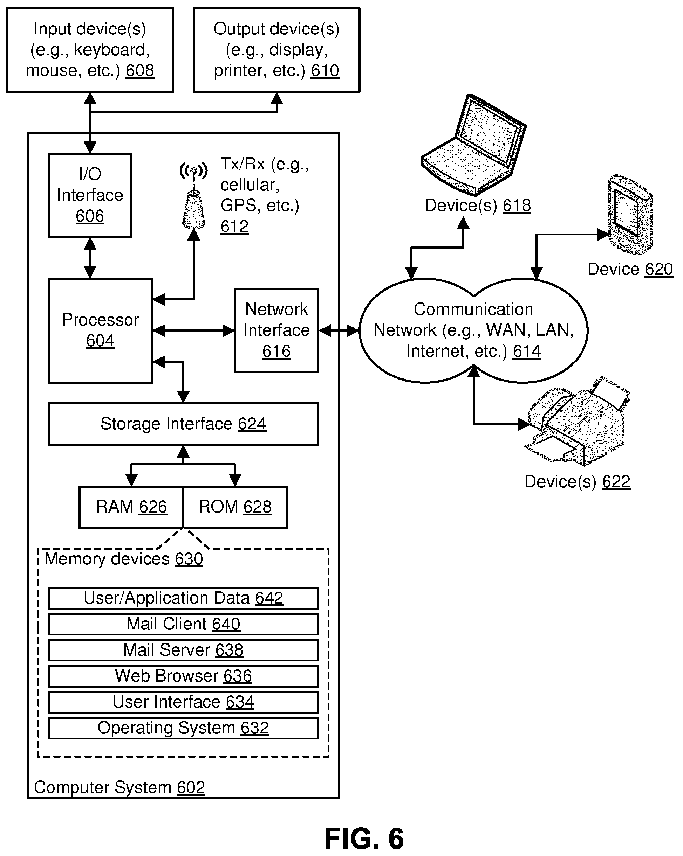

Referring now to FIG. 6, a block diagram of an exemplary computer system 602 for implementing various embodiments is disclosed. The computer system 602 may comprise a central processing unit ("CPU" or "processor") 604. The processor 604 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 604 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

The processor 604 may be disposed in communication with one or more input/output (I/O) devices via an I/O interface 606. The I/O interface 606 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 606, the computer system 602 may communicate with one or more I/O devices. For example, an input device 608 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. An output device 610 may be a printer, fax machine, video display (e.g., cathode ray tube (CRT), liquid crystal display (LCD), light-emitting diode (LED), plasma, or the like), audio speaker, etc. In some embodiments, a transceiver 612 may be disposed in connection with the processor 604. The transceiver 612 may facilitate various types of wireless transmission or reception. For example, the transceiver 612 may include an antenna operatively connected to a transceiver chip (e.g., Texas Instruments WiLink WL1283, Broadcom BCM4760IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 604 may be disposed in communication with a communication network 614 via a network interface 616. The network interface 616 may communicate with the communication network 614. The network interface 616 may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 614 may include, without limitation, a direct interconnection, local area network (LAN), wide area network (WAN), wireless network (e.g., using Wireless Application Protocol), the Internet, etc. Using the network interface 616 and the communication network 614, the computer system 602 may communicate with the devices 618, 620, and 622. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 602 may itself embody one or more of these devices.

In some embodiments, the processor 604 may be disposed in communication with one or more memory devices (e.g., a RAM 626, a ROM 628, etc.) via a storage interface 624. The storage interface 624 may connect to memory devices 630 including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices 630 may store a collection of program or database components, including, without limitation, an operating system 632, a user interface application 634, a web browser 636, a mail server 638, a mail client 640, a user/application data 642 (e.g., any data variables or data records discussed in this disclosure), etc. The operating system 632 may facilitate resource management and operation of the computer system 602. Examples of the operating system 632 include, without limitation, Apple Macintosh OS X, Unix, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. The user interface 634 may facilitate display, execution, interaction, manipulation, or operation of program components through textual or graphical facilities. For example, user interfaces may provide computer interaction interface elements on a display system operatively connected to the computer system 602, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 602 may implement the web browser 636 stored program component. The web browser 636 may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 602 may implement the mail server 638 stored program component. The mail server 638 may be an Internet mail server such as Microsoft Exchange, or the like. The mail server 638 may utilize facilities such as ASP, ActiveX, ANSI C++/C#, Microsoft .NET, CGI scripts, Java, JavaScript, PERL, PHP, Python, WebObjects, etc. The mail server may utilize communication protocols such as internet message access protocol (IMAP), messaging application programming interface (MAPI), Microsoft Exchange, post office protocol (POP), simple mail transfer protocol (SMTP), or the like. In some embodiments, the computer system 602 may implement the mail client 640 stored program component. The mail client 640 may be a mail viewing application, such as Apple Mail, Microsoft Entourage, Microsoft Outlook, Mozilla Thunderbird, etc.

In some embodiments, the computer system 602 may store the user/application data 642, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

It will be appreciated that, for clarity purposes, the above description has described embodiments of the invention with reference to different functional units and processors. However, it will be apparent that any suitable distribution of functionality between different functional units, processors or domains may be used without detracting from the invention. For example, functionality illustrated to be performed by separate processors or controllers may be performed by the same processor or controller. Hence, references to specific functional units are only to be seen as references to suitable means for providing the described functionality, rather than indicative of a strict logical or physical structure or organization.

Various embodiments of the invention provide systems and methods for building contextual highlights for conferencing systems. The above described method enables generation of a personalized and contextual summary of a multimedia communication session that may be a conference session or a webinar. The summary is generated based on individual needs, topics, roles, or participants by dynamically generating relevant meta-data along with content time stamp by using a semantic analyzer and a voice analyzer.

The specification has described systems and methods for building contextual highlights for conferencing systems. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A computer-implemented method of highlighting at least a part of communication segments between a plurality of participants in a communication network, the method comprising:
extracting semantic information and a plurality of vocal cues from multimedia communication data exchanged between the plurality of participants;
identifying communication segments within the multimedia communication data by aggregating the semantic information and the plurality of vocal cues;
associating meta-data with each of the communication segments based on communication segment parameters; and
highlighting, contextually, at least a part of the communication segments based on highlighting parameters received from a user.

2. The method of claim 1, wherein the highlighting parameters comprises at least one of multimedia communication sessions of interest to the user, approximate output length of highlighting required by the user, participants in the multimedia communication sessions, importance and relevance associated with the participants, time interval of interest in the multimedia communication sessions, or contextual key words used in the multimedia communication sessions.

3. The method of claim 1 or claim 2, wherein extracting semantic information from the multimedia communication data comprises converting voice communication data in the multimedia communication data into text data using a natural language processor.

4. The method of any of the preceding claims, wherein the semantic information comprises at least one of an ontological map of the conversations in the multimedia communication data, keywords, relevance of keywords, a relationship between keywords, grouping of the conversations, time slots for each conversation or mapping of each conversation with a conducting participant.

5. The method of any of the preceding claims, wherein extracting the plurality of voice cues comprises filtering conversations gaps in the multimedia communication data to generate clean conversation segments.

6. The method of any of the preceding claims, wherein a vocal cue for a participant comprises at least one of the participant's vocal intensity, engagement, authority, tone, emotions, pitch of voice, speed of conversation or response time.

7. The method of any of the preceding claims, wherein the multimedia communication data comprises at least one of voice data and video data.

8. The method of any of the preceding claims, wherein identifying communication segments by aggregating the semantic information and the plurality of vocal cues comprises using:
grouping of conversations in the multimedia communication data and time slots for each conversation; and
clean conversation segments generated post filtering conversation gaps in the multimedia communication data.

9. The method of any of the preceding claims, wherein highlighting comprises:
creating a highlighting template specific to the user using the highlighting parameters; and
identifying matches between meta-data associated with the communication segments and the highlighting template specific to the user.

10. The method of any of the preceding claims, wherein the communication segment parameters comprise at least one of the ontological map of conversations in the multimedia communication data, the keywords, the relevance of keywords, participants in communication, intensity of at least one of the plurality of participants, engagement of at least one of the plurality of participants, authority and tone of at least one of the plurality of participant while speaking.

11. A system for highlighting at least a part of communication segments between a plurality of participants in a communication network, the system comprising;
at least one processor; and
a computer-readable medium storing instructions that, when executed by the at least one processor, cause the at least one processor to perform the method of any of the preceding claims.

12. The system of claim 11, further comprising a database configured to store the communication segments and highlighted parts of the communication segments.

13. The system of claim 11 or claim 12, further comprising a directory service to store meta-data about the plurality of participants.

14. The system of claim 13, further comprising a controller configured to register each of the plurality of participant and add the meta-data from the directory service.

15. A non-transitory computer-readable storage medium for highlighting at least a part of communication segments between a plurality of participants in a communication network, wherein the computer-readable storage medium comprises instructions that, when executed by a computing device, cause the computing device to perform the method of any of claims 1 to 10.
